# EUROPEAN PATENT SPECIFICATION

(11) **EP 1 715 618 B1**
(45) Date of publication and mention of the grant of the patent: **01.09.2010**
(21) Application number: 05714763.9
(22) Date of filing: 25.02.2005
(51) Int. Cl.: H04L 12/28

(54) **A NETWORKING EQUIPMENT OF BROADBAND ACCESSING AND METHOD THEREOF**
NETZEINRICHTUNG ZUM BREITBAND ZUGRIFF UND ENTSPRECHENDES VERFAHREN
EQUIPEMENT RESEAU DESTINE A L'ACCES A BANDE LARGE ET PROCEDE CORRESPONDANT

(30) Priority: 25.02.2004 CN 200410007595
(43) Date of publication of application: 25.10.2006
(73) Proprietor: Huawei Technologies Co., Ltd., Shenzhen, Guangdong Province 518129 (CN)
(72) Inventor: CHEN, Chuanning, Shenzhen, Guangdong 518129 (CN); CHEN, Wumao, Shenzhen, Guangdong 518129 (CN); JIN, Yangbao, Shenzhen, Guangdong 518129 (CN)
(74) Representative: Thun, Clemens
(86) International application number: PCT/CN2005/000231
(87) International publication number: WO 2005/083932

(56) References cited:
- WO-A1-01/31969
- WO-A2-03/107598
- CN-A- 1 402 481
- CN-A- 1 466 316
- KR-A- 2002 052 067
- SHOW Y-G ET AL: "Asymmetric digital subscriber line access multiplexer-architecture design and implementation" MICROPROCESSORS AND MICROSYSTEMS, IPC BUSINESS PRESS LTD. LONDON, GB, vol. 27, no. 7, 1 August 2003 (2003-08-01), pages 315-326, XP004437385 ISSN: 0141-9331
- UPP D ED - MUKUND P R ET AL: "DSL technology shifts carriers to the passing lane for Internet access" ASIC CONFERENCE AND EXHIBIT, 1997. PROCEEDINGS., TENTH ANNUAL IEEE INTERNATIONAL PORTLAND, OR, USA 7-10 SEPT. 1997, NEW YORK, NY, USA,IEEE, US, 7 September 1997 (1997-09-07), pages 137-141, XP010243378 ISBN: 0-7803-4283-6

## Description

### Field of the invention

The present invention relates to network communication techniques, and more specifically, to a broadband access device and method thereof.

### Background of the invention

In a system of broadband access network, a networking device for broadband access implements the aggregation function for subscriber lines, converging traffics from subscribers to one or more uplinks and distributing traffics from uplinks to subscribers.

There are two kinds of uplink: Asynchronous Transfer Mode (ATM) uplink in which traffics are encapsulated into ATM cells; Ethernet uplink in which traffics are encapsulated into Ethernet frames.

The broadband access techniques used on subscriber lines include: Digital Subscriber Line (xDSL) access, remote Local Area Network (LAN) access, Hybrid Fiber Coax (HFC) access, etc. Although there are great differences in the principles of theses techniques and in the protocols of physical layer used by these techniques, there are basically only two encapsulation modes used by these techniques: ATM cell encapsulation and Ethernet frame encapsulation.

Because of the different access techniques adopted on the uplink and subscriber lines, independent devices have to be involved in the implementation of connecting uplink with subscriber devices.

Therefore, a broadband subscriber access device includes typically a subscriber interface service board, a backboard and a master control board, wherein the subscriber interface service board is responsible for the physical-layer processing of the subscriber line, i.e., modulation/demodulation, and the adaptation of Layer 2 protocols; the master control board implements device control, data exchange, and uplink processing; and the backboard serves to connect the subscriber interface service board with the master control board.

Usually, the backboard connects the subscriber interface service board with the master control board using the following three types of buses:
(1) ATM bus, i.e., the so-called "ATM kernel" technique, is adopted on the backboard. The ATM kernel means that the access devices adopt ATM switching structure and termination of ATM Layer is implemented by the master control board.
   If the ATM cell encapsulation is adopted to encapsulate the subscriber traffics, the adaptation of Layer 2 protocols on the subscriber interface board could be very simple, and the subscriber cells are transmitted transparently in the backboard. If the Ethernet frame encapsulation is adopted, however, the subscriber interface board has to incorporate the function of encapsulation adaptation from Ethernet frame to ATM cell, i.e., the function of ATM Segmentation and Reassembly (SAR), which will increase the cost of subscriber interface board.
(2) Ethernet bus, Fast Ethernet (FE) bus, or Gigabyte Ethernet (GE) bus, i.e., the so-called "IP kernel" technique is adopted on the backboard. The IP kernel means that the access devices adopt Ethernet switching structure and termination of ATM Layer is implemented by the subscriber interface board.
   If the Ethernet frame encapsulation is adopted to encapsulate the subscriber traffics, the adaptation of Layer 2 protocols on the subscriber interface board could be very simple, and the subscriber packets are transmitted transparently in the backboard. If the ATM cell encapsulation is adopted, however, the subscriber interface board has to incorporate the function of encapsulation adaptation from Ethernet frame to ATM cell, i.e., the function of ATM SAR, which will also increase the cost of subscriber interface board.
(3) Both ATM bus and Ethernet bus are adopted on the backboard. In this way, no matter which encapsulation mode is adopted, the subscriber interface board does not need the function of ATM SAR. When the subscriber traffics are encapsulated into ATM cells, it could be transmitted transparently via ATM bus, and when the subscriber traffics is encapsulated into Ethernet frames, it could be transmitted transparently via Ethernet bus.

Whereas the above-mentioned method reduces the cost of subscriber interface board compared with the case that only one bus is adopted, the complexity and cost of backboard are increased since two kinds of bus are adopted on the backboard.

SHOWY-G ET AL " Asymmetric digital subscriber line access multiplexer-architecture design and implementation" MICROPROCESSORS AND MICROSYSTEMS, IPC BUSINESS PRESS LTD.LONDON, GB, vol.27, no.7, 1 August 2003 (2003-08-01), at best discloses DSLAM system architecture. The DSLAM system includes system backplane, ADSL Access Card, ATM Trunk Card, System Control Card, and Power Supply Card. Cells received from multiple ADSL lines are transported on the backplane via bi-directional data buses. Cells transmit on the backplane is attached with an 8-bit Routing Tag to identify their source/destination cards.

WO 03/107598 at best discloses system architecture for transmitting ATM cells received from multiple communication networks. If the traffic data received are not ATM cells, the traffic data have to be transformed to ATM cells first.

However, the above two referenced documents still have the above discussed problems.

### Summary of the invention

The present invention provides a broadband access device and a broadband access method, not only implementing broadband access in case that different access techniques are adopted on uplink and subscriber line but also simplifying the device structure as much as possible and reduce the cost.

The broadband access device includes:
a master control board;
a backboard, configured with a uniform serial bus;
a subscriber interface board, connected with the master control board via the serial bus, and configured to encapsulate payload information obtained from signals of digital loop subscriber into serial signal frames of the serial bus; and encapsulate payload information in Ethernet subscriber signals into the serial signal frames of the serial bus;
the master control board, configured to receive uplink traffics including Asynchronous Transfer Mode, ATM, cells and Ethernet frames, encapsulate the ATM cells obtained from the uplink traffics into the serial signal frames of the serial bus and encapsulate the Ethernet frames obtained from the uplink traffics into the serial signal frames of the serial bus;
the master control board, configured to extract ATM cells from the serial signal frames received from the subscriber interface board via the uniform serial bus and transmit the extracted ATM cells via an uplink interface;
the master control board, configured to extract Ethernet frames form the serial signal frames received from the subscriber interface board via the uniform serial bus and transmit the extracted Ethernet frames via the uplink interface;
the backboard, configured to transmit the serial signal frames between the master control board and the subscriber interface board;
the subscriber interface board, configured to extract the ATM cells from the serial signal frames received from the master control board via the uniform serial bus and transmit the extracted ATM cells via an interface of subscriber line; and
the subscriber interface board, configured to extract the Ethernet frames from the serial signal frames received from the master control board via the uniform serial bus and transmit the extracted Ethernet frames via the interface of subscriber line.

The broadband access method includes steps of:
connecting a master control board with a subscriber interface board of a broadband access device via a uniform serial bus;
transforming the subscriber traffics which needed to be transmitted into serial signal frames of the serial bus by either one of the master control board and the subscriber interface board, and transmitting the serial signal frames to the other one of the two boards;
upon receiving the serial signal frames by the other board, restoring the traffics and transmitting the restored traffics to the corresponding data channel based on the type of the restored traffics; wherein transforming, by either one of the master control board and the subscriber interface board, the subscriber traffics which needed to be transmitted into serial signal frames of the serial bus comprises:
   encapsulating, by the subscriber interface board, payload information obtained from signals of digital loop subscriber into the serial signal frames of the serial bus; and
   encapsulating, by the subscriber interface board, payload information in Ethernet subscriber signals into the serial signal frames of the serial bus;
   encapsulating, by the master control board, ATM cells obtained from uplink traffics into the serial signal frames of the serial bus; and
   encapsulating, by the master control board, Ethernet frames obtained from the uplink traffics into the serial signal frames of the serial bus.

As can be seen from the above-mentioned device and method, a uniform serial bus is used to transform the traffics from both the uplink and the subscriber line into serial signal frames of the serial bus before exchanging the serial signal frames, thereby ensuring the broadband access in case that different access techniques are adopted on uplink and subscriber lines, simplifying the structures of such devices as the backboard and subscriber interface board and reducing the cost and complexity of broadband access. Since the subscriber interface does not need the function of segmentation and reassembly, the interface between the subscriber board and the backboard bus can transfer traffics of different types without transformation, which makes the access device applicable to subscriber accesses of different service types. Meanwhile, by adopting a uniform bearer mode, the master control board is able to provide an independent external interface for different services, and the access device meets the flexible networking demand of broadband network.

### Brief description of the drawings

Figure 1 is a schematic diagram illustrating the internal structure of the broadband access device in accordance with an embodiment of this invention.
Figure 2 is a schematic diagram illustrating the structure of the digital loop interface unit of the broadband access device shown in Figure 1.
Figure 3 is a schematic diagram illustrating the structure of Ethernet interface unit of the broadband access device shown in Figure 1.
Figure 4 is a flow chart for processing the traffic inputted from the subscriber line in accordance with the broadband access method of this invention.
Figure 5 is a flow chart for processing the traffic inputted from the uplink in accordance with the broadband access method of this invention.
Figure 6 is a schematic diagram illustrating the process of encapsulating ATM cells to LVDS frames in accordance with an embodiment of this invention.
Figure 7 is a schematic diagram illustrating the process of encapsulating Ethernet frames to LVDS frames in accordance with an embodiment of this invention.

### Detailed description of embodiments

This invention will hereinafter be described with reference to the accompanying drawings.

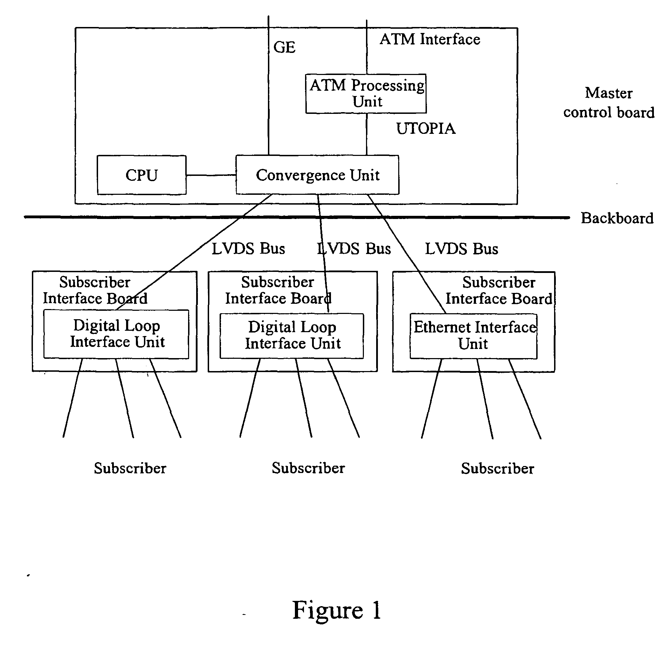

Figure 1 shows the internal structure of the broadband access device in accordance with the invention. Like a broadband access device in the prior art, the broadband access device of the invention also includes the subscriber interface board, the master control board and the backboard, wherein the subscriber interface board is responsible for physical layer processing of the traffic from the subscriber line, e.g., modulation/demodulation, and the adaptation of Layer 2 protocols; the master control board is used to control the device to implement data exchange and uplink processing; and the subscriber interface board and master control board are connected via the serial bus provided by the backboard.

According to the present invention, there is only one type of bus on the backboard to bear all the service traffics exchanged between the subscriber interface board and the master control board. The bearer bus can be Low Voltage Differential Signaling (LVDS) high speed serial bus as well as other serial buses, such as Current-Mode Logic (CML) bus, Universal Serial Bus (USB), etc., and these serial buses can be the bearer of either ATM service information or other service information such as IP service information. In addition, for the convenience of subscribers accessing from different distances, digital loop interface units for getting different digital-loop subscribers accessed or Ethernet interface units for getting other broadband access devices accessed are provided on different subscriber interface boards, respectively. The digital loop interface unit and Ethernet interface unit are connected to the backboard via the uniform bus, respectively, for transforming data between the format of the subscriber line and the format of the uniform bus. Therefore, the design of the backboard could be very simple. Because of the simple design of the backboard and the adjustable bus speed, the backboard could be widely used in various broadband access devices.

Take the LVDS high speed serial bus as an example, the backboard can then be configured with only this type of bus and no further description is herein given to the structure of the backboard.

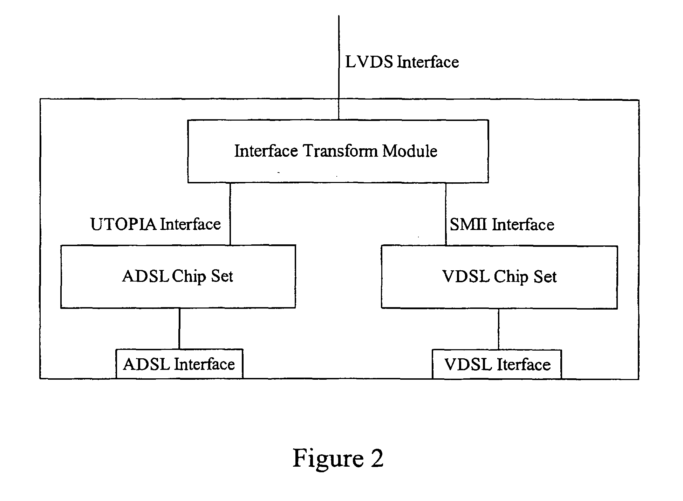

Figure 2 shows the internal structure of the digital loop interface unit. As shown in Figure 2, the digital loop interface unit includes the digital loop subscriber interface, the digital loop chip sets and the interface transform module.

The digital loop subscriber interface is used for receiving signals of digital loop subscribers, and several interfaces could be employed for different subscriber signals, such as Asymmetrical Digital Subscriber Loop (ADSL) interface, Symmetrical Digital Subscriber Line (SDSL) interface, Very high bit-rate Digital Subscriber Loop (VDSL) interface and High bit-rate Digital Subscriber Loop (HDSL) interface, etc. Figure 2 shows two of the interfaces as an example, i.e., ADSL and VDSL interfaces, and in practical applications, one or multiple interfaces could be chosen as required.

The digital loop chip set corresponding to the digital loop subscriber interface is used for obtaining payload information in signals of digital loop subscriber.

The interface transform module is used for encapsulating the payload information obtained from signals of digital loop subscriber into LVDS signal frames, and then sending this payload information to the master control board via the LVDS bus. In the interface transform module, there are interface transform sub-modules corresponding to each of the digital loop subscriber interfaces, mapping different service cells to LVDS frames. For example, an interface transform sub-module which maps ATM cells to LVDS frames corresponds to an ADSL interface which receives and sends subscribers' ATM services, and another interface transform sub-module which implements the processing of Ethernet frames on the bearer of LVDS frames corresponds to a VDSL interface which receives and sends subscribers' Ethernet services. These interface transform sub-modules can be implemented by large-scale digital logic circuit or Application Specific Integrated Circuit (ASIC) chips, or can be integrated into one module to map different service cells to LVDS frames, as shown in Figure 2.

In this embodiment, the interface transform module can provide a Universal Test and Operations PHY Interface for ATM (UTOPIA) and a Serial Media Independent Interface ( SMII ) for IP service inside the broadband access device, thereby be the bearer of ATM service and IP service simultaneously. As a result, it is not necessary to provide the subscriber interface board with SAR function from ATM to Ethernet as required by the pure ATM kernel and pure IP kernel in the prior art, thereby reducing the complexity of transformation on the subscriber interface board as well as the costs.

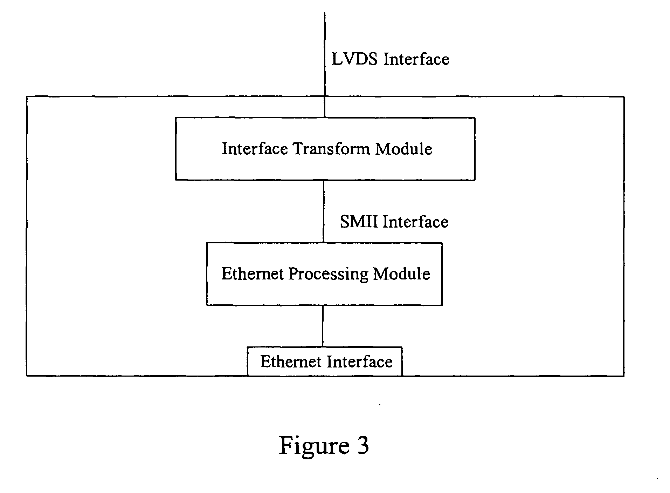

Figure 3 shows the structure of Ethernet interface unit. As shown in Figure 3, the Ethernet interface unit includes the Ethernet interface, the Ethernet SAR module and the interface transform module.

The Ethernet interface is used for receiving the Ethernet subscriber signals. Usually, the Ethernet SAR module adopts the cheap commercial Lanswitch chip for use in processing Ethernet frames. The interface transform module is used for encapsulating the payload information in Ethernet subscriber signals into LVDS signal frames, and then transmitting the encapsulated payload information to the master control board via the LVDS bus.

Although the structure of the subscriber interface board is described in the above-mentioned embodiment of this invention, it should be noted that this invention is not limited to the above-mentioned structure, and either the above-mentioned design of providing multiple interfaces by one subscriber interface board or the design of multiple subscriber interface boards providing multiple interfaces, respectively, to get different subscribers accessed may be adopted. Moreover, other broadband access devices can be attached to each of the subscriber interface boards, forming a cascade system. As long as the modifications and alterations conform to the idea of this invention, i.e., a uniform serial bus is adopted as the bearer of service information of different types, they should be covered in the protection scope of this invention.

As shown in Figure 1, the master control board of the broadband access device includes a CPU, a convergence unit and an ATM processing unit.

The CPU is used for controlling the subscriber interface board to conduct modulation and demodulation of subscriber traffics and adaptation between Layer 2 protocols.

The convergence unit converges the traffic from the LVDS bus of the backboard via its internal serial signal convergence module, differentiates between ATM services and IP services, and then carries out different processing, respectively. Specifically, the convergence unit carries out SAR processing for the traffic which enters an IP network from subscribers of ATM service, and similarly, carries out SAR processing and then sends the processed traffic to the corresponding exit for the traffic which enters an ATM network from subscribers of IP service. In the reversed direction, the traffic of ATM service and IP service received from the uplink at the network side is classified and processed, then transformed to LVDS frames before being transmitted to each of the corresponding subscriber interface boards via the LVDS bus of the backboard. Similarly, the convergence unit has to make the SAR processing of the traffic which is from ATM network to IP service subscribers or from IP network to ATM service subscribers before transmitting the traffic to the subscriber interface board.

The ATM processing unit is used for differentiating different subscribers' ATM cells in the signal frames processed by the convergence unit. When the broadband access device is provided with an ATM interface, the ATM processing unit serves to process ATM services or transform the Virtual Path Identifier (VPI)/ Virtual Channel Identifier (VCI) so as to determine the virtual channel link of ATM services.

In order to meet different demands of broadband networking, multiple interfaces, such as Gigabit Media Independent Interface (GMII) and UTOPIA interface, can be configured in the convergence unit for use in transferring Ethernet traffics and ATM traffics obtained from the LVDS bus, respectively.

As the bearer of information of different transmission networks, the master control board is also configured with multiple GE optical interfaces and ATM optical interfaces for use in transferring Ethernet or ATM traffics to the corresponding uplink optical network ports

It should be understood for those skilled in the art that this invention is not limited to the design described in the embodiment thereof, in which the GE optical interface and ATM optical interface to uplink are configured in the master control board, instead, the invention can have other designs by applying minor modifications to the above-mentioned design, for example, separating the uplink interfaces from the master control board and designing an independent uplink interface board to accommodate the uplink interfaces.

It can be seen from the above-mentioned structure of broadband access device in this invention that the application of uniform bearer serial bus not only simplifies the design of the structure of backboard and reduces costs, but also makes it more convenient to get subscribers of different services accessed by adopting uniform platform for subscribers of different services. Meanwhile, independent interfaces are provided for uplink of ATM service and uplink of IP service, respectively, such that ATM services could be completely independent from IP services, thereby meeting various networking demands.

The idea of the broadband access method of this invention is also based on a uniform bearer bus such that a uniform bearer is provided for different services, which are classified, processed and then sent to the corresponding uplinks.

The procedure of the method in accordance with this invention is hereinafter described in detail with reference to the structure of the device shown in Figure 1.

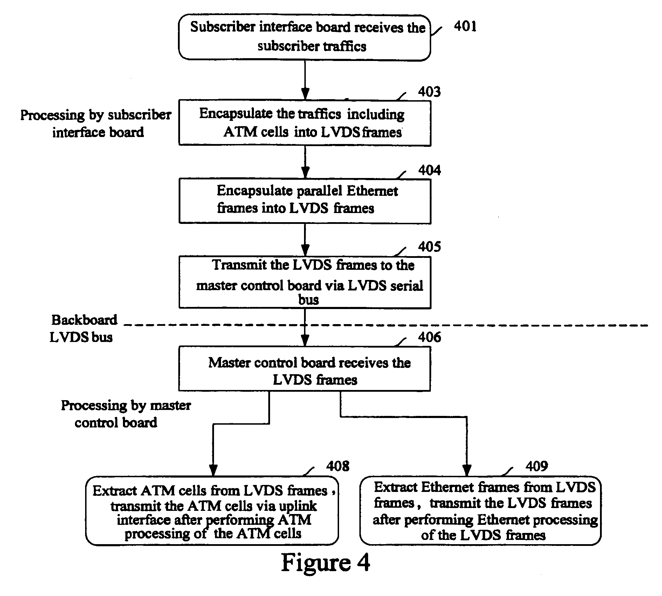

As shown in Figure 4, the method by which the broadband access device of this invention processes the traffics inputted from subscriber lines includes the steps of:
Step 401: The subscriber interface board receives subscriber traffics of different types, respectively, which include ATM cells and Ethernet frames.
Steps 402∼404: Determine the type of the subscriber traffics received currently.

If the subscriber traffics are ATM cells, proceed to Step 403 of encapsulating the ATM cells into LVDS frames in the Cell Over LVDS mode. The practical operations are very easy, which include transforming the parallel ATM cells to serial signals through parallel/serial transformation, performing the level adaptation if necessary, and transmitting the serial signals via the LVDS serial bus.

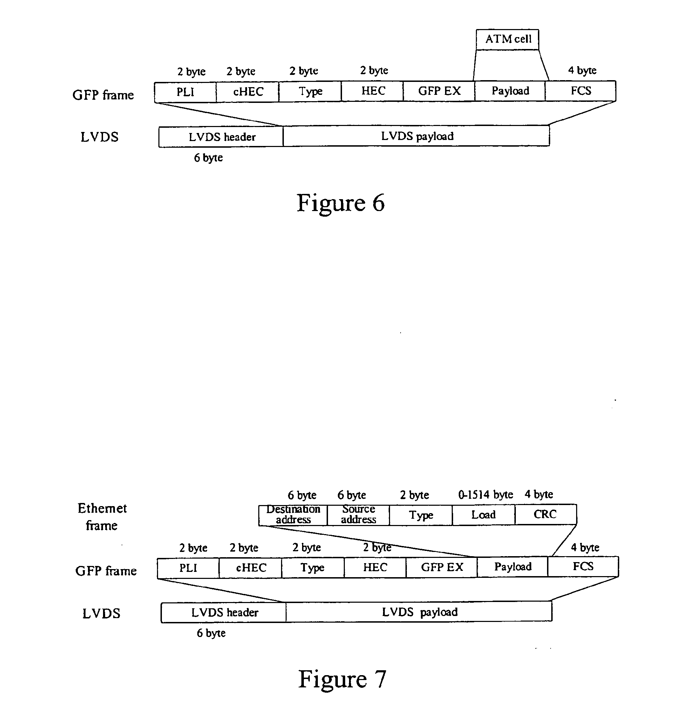

A detailed encapsulation process is shown in Figure 6. As shown in Figure 6, the transparent Generic Framing Procedure (GFP) technique is adopted to encapsulate the ATM cells. First ATM cells are encapsulated into the payload field of each GFP frame, then the GFP frames are encapsulated into the LVDS payload of LVDS frames.

If the subscriber traffics are Ethernet frames, proceed to Step 404 of encapsulating the traffics with the Ethernet frame structure into LVDS frames in the Ethernet Over LVDS mode, that is, transforming parallel Ethernet frames into serial signals through parallel/serial transformation, performing the level adaptation if necessary, and then sending the serial signals via the LVDS serial bus.

A detailed encapsulation process is shown in Figure 7. As shown in Figure 7, the frame mapping mode is adopted to encapsulate the Ethernet frames of IP services. First the Ethernet frames are encapsulated into the payload field of each GFP frame, and then the GFP frames are encapsulated into the LVDS payload of LVDS frames.

Step 405: The subscriber interface board transmits the encapsulated LVDS frames to the master control board via the LVDS serial bus of the backboard.

The order of Step 403 and Step 404 can be reversed. In the broadband access device illustrated in Figure 1, if each subscriber interface board provides only one type of subscriber interface for subscriber traffics, Steps 402 to 404 are not necessary, and the subscriber interface board could directly transform the received subscriber traffics to LVDS frames and transmit the transformed traffics via the LVDS serial bus.

Step 406: The master control board receives the LVDS frames via the LVDS bus of backboard, and then converges the LVDS frames of different services.

Steps 407 ∼ 409: The master control board decides whether the traffics encapsulated in the LVDS frames are ATM cells or Ethernet frames.

If the traffics are ATM cells, proceed to Step 408 to extract ATM cells from the LVDS frames, perform ATM processing, perform SAR processing for the traffic which enters an IP network from a subscriber of ATM service, and transmit the processed ATM traffics via the corresponding uplink interface.

If the traffics are Ethernet frames, proceed to Step 409 to extract Ethernet frames from the LVDS frames, perform Ethernet processing, perform SAR processing for the traffic which enters an ATM network from a subscriber of IP service, and transmit the processed Ethernet traffics via the corresponding uplink interface.

In order to realize the above-mentioned judging step, the subscriber interface board adds identifiers to different subscriber traffics while encapsulating the subscriber traffics into LVDS frames, for instance, the subscriber interface board receiving ATM cells adds "01" to the header of the LVDS frame as the identifier while encapsulating the subscriber traffics; the subscriber interface board receiving Ethernet frames adds "02" to the header of the LVDS frame as the identifier while encapsulating the subscriber traffics. In this way, the master control board can determine the traffic type according to the identifier in the header of the LVDS frame upon receiving the LVDS frame from the backboard.

The order of the above-mentioned Step 408 and Step 409 could be reversed. In the broadband access device shown in Figure 1, if there is a fixed corresponding relationship between the subscriber interface board and the LVDS bus which is connected to the master control board, and the LVDS frames containing subscriber traffics are encapsulated respectively according to the type of subscriber traffics, Steps 407 to 409 could be skipped.

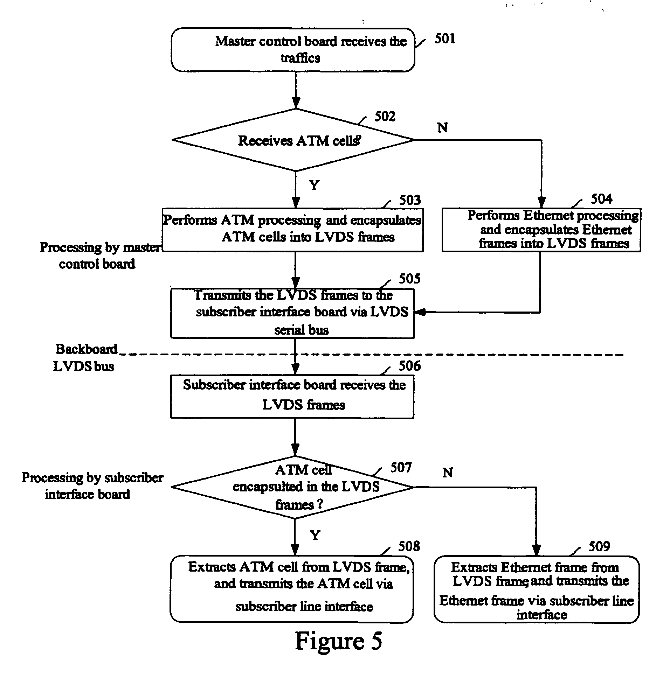

As shown in Figure 5, the procedure by which the broadband access device processes the traffics inputted from uplinks of the network side comprises the steps of:
Step 501: The master control board receives the uplink traffics of different types, which include ATM cells and Ethernet frames.
Steps 502 ∼ 504: The master control board sorts the ATM and IP traffics received from uplinks of the network side, i.e., deciding whether the traffics are ATM cells or Ethernet frames.

If the traffics are ATM cells, proceed to Step 503 to perform necessary ATM processing, perform SAR processing for the traffics that are sent from ATM network to an IP service subscriber, and encapsulate the ATM cells into LVDS frames in the Cell Over LVDS mode.

If the traffics are Ethernet frames, proceed to Step 504 to perform necessary Ethernet processing, perform SAR processing for the traffics that are sent from IP network to an ATM service subscriber, and encapsulate the Ethernet frames into LVDS frames in the Ethernet Over LVDS mode.

Step 505: The master control board transmits the encapsulated LVDS frames to the subscriber interface board via the LVDS serial bus.

The order of above-mentioned Step 503 and Step 504 can be reversed.

Step 506: The subscriber interface board receives the LVDS frames.

Steps 507 ∼ 509: The subscriber interface board decides whether it is ATM cells or Ethernet frames that are encapsulated in the LVDS frames.

If ATM cells are encapsulated in the LVDS frames, proceed to Step 508 to extract the ATM cells from the LVDS frames, and then transmit the extracted ATM cells via the corresponding interface of subscriber line.

If Ethernet frames are encapsulated in the LVDS frames, proceed to Step 509 to extract the Ethernet frames from the LVDS frames, and then transmit the extracted Ethernet frames via the corresponding interface of subscriber line.

The foregoing is only the preferred embodiments of this invention and is not intended to limit the scope of protection as defined by the appended claims.

## Claims

1. A broadband access device, **characterized by** comprising:
a master control board;
a backboard configured with a uniform serial bus;
a subscriber interface board connected with the master control board via the serial bus, and configured to encapsulate payload information including Asynchronous Transfer Mode, ATM, cells obtained from signals of digital loop subscriber into serial signal frames of the serial bus and encapsulate payload information including Ethernet frames obtained from other broadband devices into the serial signal frames of the serial bus;
the master control board configured to receive uplink traffics comprising ATM cells and Ethernet frames, encapsulate the ATM cells obtained from the uplink traffics into the serial signal frames of the serial bus and encapsulate the Ethernet frames obtained from the uplink traffics into the serial signal frames of the serial bus;
the master control board configured to extract ATM cells from the serial signal frames received from the subscriber interface board via the uniform serial bus and transmit the extracted ATM cells via an uplink interface;
the master control board configured to extract Ethernet frames form the serial signal frames received from the subscriber interface board via the uniform serial bus and transmit the extracted Ethernet frames via the uplink interface;
the backboard configured to transmit the serial signal frames between the master control board and the subscriber interface board;
the subscriber interface board configured to extract the ATM cells from the serial signal frames received from the master control board via the uniform serial bus and transmit the extracted ATM cells via an interface of the subscriber interface board; and
the subscriber interface board configured to extract the Ethernet frames from the serial signal frames received from the master control board via the uniform serial bus and transmit the extracted Ethernet frames via an interface of the subscriber interface board.

2. The device according to Claim 1, wherein the subscriber interface board comprises:
a digital loop interface unit configured to get digital loop subscribers accessed, or an Ethernet interface unit configured to get other broadband access devices accessed.

3. The device according to Claim 2, wherein the digital loop interface unit comprises at least one of:
a digital loop subscriber interface configured to receive and send the signals of digital loop subscribers;
a digital loop chip set configured to obtain the payload information from the signals of digital loop subscribers;
an interface transform module configured to encapsulate the payload information obtained from the signals of digital loop subscribers into the serial signal frames of the serial bus and transform the serial signal frames received from the serial bus into the signals of digital loop subscribers.

4. The device according to Claim 3, wherein the digital loop subscriber comprises at least one of: an asymmetrical digital loop subscriber, symmetrical digital loop subscriber, hyper speed digital loop subscriber and high bit rate digital loop subscriber;
the digital loop subscriber interface comprises at least one of:
an asymmetrical digital loop interface, configured to receive and send the signals of asymmetrical digital loop subscriber;
a symmetrical digital loop interface, configured to receive and send the signals of symmetrical digital loop subscriber;
a hyper speed digital loop interface, configured to receive and send the signals of hyper speed digital loop subscriber; and
a high bit rate digital loop interface, configured to receive and send the signals of a high bit rate digital loop subscriber.

5. The device according to any of Claim 1 to Claim 4, wherein the master control board comprises:
a convergence unit configured to converge all the serial signal frames received via the serial bus, obtain the subscriber traffics by classifying the serial signal frames, process the classified serial signal frames, and transmit the subscriber traffics to the corresponding port at the network side; as well as classify the subscriber traffics received from the network side, process the classified subscriber traffics and transform the subscriber traffics into serial signal frames, and transmit the serial signal frames to the serial bus.

6. The device according to Claim 5, wherein the master control board further comprises:
a CPU connected with the convergence unit and configured to control the subscriber interface board to make physical layer processing of the subscriber traffics and perform adaptation of Layer 2 protocols;
an ATM processing unit connected with the convergence unit, and configured to distinguish different subscribers' ATM cells in the serial signal frames received and processed by the convergence unit.

7. The device according to Claim 6, wherein the convergence unit further comprises:
a serial signal convergence module configured to distinguish different services on the serial bus and obtaining the corresponding service information;
at least one Ethernet interface configured to send Ethernet traffics obtained by the serial signal convergence module;
a Universal Test and Operations PHY Interface for ATM, UTOPIA, configured to transmit ATM traffics obtained by the serial signal convergence module to the ATM processing unit.

8. The device according to Claim 5, wherein the master control board further comprises:
at least one Gigabyte Ethernet GE, optical interface configured to transform the traffics sent from the Ethernet interface and transmit the transformed traffics to the corresponding uplink port of an optical network;
at least one ATM optical interface configured to transform different subscribers' ATM cells processed by the ATM processing unit and transmit the transformed traffics to the corresponding uplink port of an optical network.

9. A broadband access method, **characterized by** comprising steps of:
connecting a master control board with a subscriber interface board of a broadband access device via a uniform serial bus;
transforming, by either one of the master control board and the subscriber interface board, the subscriber traffics which needed to be transmitted into serial signal frames of the serial bus and transmitting the serial signal frames to the other one of the two boards (403, 404, 405, 503, 504, 505);
upon receiving the serial signal frames, restoring, by the other board, the traffics and transmitting the restored traffics to the corresponding interface based on the type of the restored traffics (406, 408, 409, 506, 508, 509); wherein the step of transforming, by either one of the master control board and the subscriber interface board, the subscriber traffics which needed to be transmitted into serial signal frames of the serial bus comprises the steps of:
encapsulating, by the subscriber interface board, payload information including ATM cells obtained from signals of digital loop subscriber into the serial signal frames of the serial bus (403); and
encapsulating, by the subscriber interface board, payload information including Ethernet frames obtained from other broadband devices into the serial signal frames of the serial bus (404);
encapsulating, by the master control board, ATM cells obtained from uplink traffics into the serial signal frames of the serial bus (503); and
encapsulating, by the master control board, Ethernet frames obtained from the uplink traffics into the serial signal frames of the serial bus (504).

10. The method according to Claim 9,
wherein transmitting the serial signal frames to the other one of the two boards comprises steps of: transmitting, by the subscriber interface board, the serial signal frames to the master control board via the serial bus (405), and transmitting, by the master control board, the serial signal frames to the corresponding subscriber interface board via the serial bus (505); and
wherein upon receiving the serial signal frames, restoring, by the other board, the traffics and transmitting the restored traffics to the corresponding data channel based on the type of the restored traffics comprises steps of:
converging, by the master control board, the subscriber traffics of the same type according to the service type of the subscriber traffics received from the serial bus, and transmitting the subscriber traffics via an uplink interface, and extracting, by the subscriber interface board, the subscriber traffics from the serial signal frames received from the serial bus and transmitting the subscriber traffics to corresponding subscriber.

## Patentansprüche

1. Breitband-Zugangseinrichtung, **dadurch gekennzeichnet, dass** sie Folgendes umfasst:
ein Master-Steuerboard;
ein mit einem uniformen seriellen Bus konfiguriertes Backboard;
ein über den seriellen Bus mit dem Master-Steuerboard verbundenes Teilnehmer-Schnittstellenboard, das dafür ausgelegt ist, aus Signalen eines Digitalanschlussteilnehmers erhaltene Nutzinformationen, die Zellen des asynchronen Transfermodus ATM umfassen, in serielle Signalrahmen des seriellen Busses einzukapseln und Nutzinformationen, die von anderen Breitband-Einrichtungen erhaltene Ethernet-Rahmen umfassen, in die seriellen Signalrahmen des seriellen Busses einzukapseln;
wobei das Master-Steuerboard dafür ausgelegt ist, Aufwärtsstreckenverkehr zu empfangen, der ATM-Zellen und Ethernet-Rahmen umfasst, die aus dem Aufwärtsstreckenverkehr erhaltenen ATM-Zellen in die seriellen Signalrahmen des seriellen Busses einzukapseln und die aus dem Aufwärtsstreckenverkehr erhaltenen Ethernet-Rahmen in die seriellen Signalrahmen des seriellen Busses einzukapseln;
das Master-Steuerboard dafür ausgelegt ist, ATM-Zellen aus den über den uniformen seriellen Bus von dem Teilnehmer-Schnittstellenboard empfangenen seriellen Signalrahmen zu extrahieren und die extrahierten ATM-Zellen über eine Aufwärtsstreckenschnittstelle zu übertragen;
das Master-Steuerboard dafür ausgelegt ist, Ethernet-Rahmen aus den über den uniformen seriellen Bus von dem Teilnehmer-Schnittstellenboard empfangenen seriellen Signalrahmen zu extrahieren und die extrahierten Ethernet-Rahmen über die Aufwärtsstreckenschnittstelle zu übertragen;
das Backboard dafür ausgelegt ist, die seriellen Signalrahmen zwischen dem Master-Steuerboard und dem Teilnehmer-Schnittstellenboard zu übertragen;
das Teilnehmer-Schnittstellenboard dafür ausgelegt ist, die ATM-Zellen aus den über den uniformen seriellen Bus von dem Master-Steuerboard empfangenen seriellen Signalrahmen zu extrahieren und die extrahierten ATM-Zellen über eine Schnittstelle des Teilnehmer-Schnittstellenboards zu übertragen; und
das Teilnehmer-Schnittstellenboard dafür ausgelegt ist, die Ethernet-Rahmen aus den über den uniformen seriellen Bus von dem Master-Steuerboard empfangenen seriellen Signalrahmen zu extrahieren und die extrahierten Ethernet-Rahmen über eine Schnittstelle des Teilnehmer-Schnittstellenboards zu übertragen.

2. Einrichtung nach Anspruch 1, wobei das Teilnehmer-Schnittstellenboard Folgendes umfasst:
eine Digitalanschluss-Schnittstelleneinheit, die dafür ausgelegt ist, Digitalanschlussteilnehmern Zugang zu gewährleisten, oder eine Ethernet-Schnittstelleneinheit, die dafür ausgelegt ist, anderen Breitband-Zugangseinrichtungen Zugang zu gewährleisten.

3. Einrichtung nach Anspruch 2, wobei die Digitalanschluss-Schnittstelleneinheit mindestens eine der folgenden Alternativen umfasst:
eine Digitalanschluss-Teilnehmerschnittstelle, die dafür ausgelegt ist, die Signale von Digitalanschlussteilnehmern zu empfangen und zu senden;
einen Digitalanschluss-Chipsatz, der dafür ausgelegt ist, die Nutzinformationen aus den Signalen von Digitalanschlussteilnehmern zu erhalten;
ein Schnittstellentransformationsmodul, das dafür ausgelegt ist, die aus den Signalen von Digitalanschlussteilnehmern erhaltenen Nutzinformationen in die seriellen Signalrahmen des seriellen Busses einzukapseln und die von dem seriellen Bus empfangenen seriellen Signalrahmen in die Signale von Digitalanschlussteilnehmern zu transformieren.

4. Einrichtung nach Anspruch 3, wobei der Digitalanschlussteilnehmer mindestens eine der folgenden Alternativen umfasst: einen asymmetrischen Digitalanschlussteilnehmer, einen symmetrischen Digitalanschlussteilnehmer, einen Hypergeschwindigkeits-Digitalanschlussteilnehmer und einen Digitalanschlussteilnehmer mit hoher Bitrate;
wobei die Digitalanschluss-Teilnehmerschnittstelle mindestens eine der folgenden Alternativen umfasst:
eine asymmetrische Digitalanschlussschnittstelle, die dafür ausgelegt ist, die Signale eines asymmetrischen Digitalanschlussteilnehmers zu empfangen und zu senden;
eine symmetrische Digitalanschlussschnittstelle, die dafür ausgelegt ist, die Signale eines symmetrischen Digitalanschlussteilnehmers zu empfangen und zu senden;
eine Hypergeschwindigkeits-Digitalanschlussschnittstelle, die dafür ausgelegt ist, die Signale eines Hypergeschwindigkeits-Digitalanschlussteilnehmers zu empfangen und zu senden; und
eine Digitalanschlussschnittstelle mit hoher Bitrate, die dafür ausgelegt ist, die Signale eines Digitalanschlussteilnehmers mit hoher Bitrate zu empfangen und zu senden.

5. Einrichtung nach einem der Ansprüche 1 bis 4, wobei das Master-Steuerboard Folgendes umfasst:
eine Konvergenzeinheit, die dafür ausgelegt ist, alle über den seriellen Bus empfangenen seriellen Signalrahmen zu konvergieren, den Teilnehmerverkehr durch Klassifizieren der seriellen Signalrahmen zu erhalten, die klassifizierten seriellen Signalrahmen zu verarbeiten und den Teilnehmerverkehr zu dem entsprechenden Port auf der Netzwerkseite zu übertragen; sowie den von der Netzwerkseite empfangenen Teilnehmerverkehr zu klassifizieren, den klassifizierten Teilnehmerverkehr zu verarbeiten und den Teilnehmerverkehr in serielle Signalrahmen zu transformieren und die seriellen Signalrahmen zu dem seriellen Bus zu übertragen.

6. Einrichtung nach Anspruch 5, wobei das Master-Steuerboard ferner Folgendes umfasst:
eine mit der Konvergenzeinheit verbundene CPU, die dafür ausgelegt ist, das Teilnehmer-Schnittstellenboard zu steuern, um Bitübertragungsschichtverarbeitung des Teilnehmerverkehrs durchzuführen und eine Anpassung von Protokollen der Schicht 2 durchzuführen;
eine mit der Konvergenzeinheit verbundene ATM-Verarbeitungseinheit, die dafür ausgelegt ist, ATM-Zellen verschiedener Teilnehmer in den durch die Konvergenzeinheit empfangenen und verarbeiteten seriellen Signalrahmen zu unterscheiden.

7. Einrichtung nach Anspruch 6, wobei die Konvergenzeinheit ferner Folgendes umfasst:
ein serielles Signalkonvergenzmodul, das dafür ausgelegt ist, verschiedene Dienste auf dem seriellen Bus zu unterscheiden und die entsprechenden Dienstinformationen zu erhalten;
mindestens eine Ethernet-Schnittstelle, die dafür ausgelegt ist, durch das serielle Signalkonvergenzmodul erhaltenen Ethernet-Verkehr zu senden;
eine PHY-Schnittstelle der Universal Test and Operations für ATM bzw. UTOPIA, die dafür ausgelegt ist, durch das serielle Signalkonvergenzmodul erhaltenen ATM-Verkehr zu der ATM-Verarbeitungseinheit zu übertragen.

8. Einrichtung nach Anspruch 5, wobei das Master-Steuerboard ferner Folgendes umfasst:
mindestens eine optische Schnittstelle des Gigabyte Ethernet GE, die dafür ausgelegt ist, den von der Ethernet-Schnittstelle gesendeten Verkehr zu transformieren und den transformierten Verkehr zu dem entsprechenden Aufwärtsstreckenport eines optischen Netzwerks zu übertragen;
mindestens eine optische Schnittstelle des ATM, die dafür ausgelegt ist, durch die ATM-Verarbeitungseinheit verarbeitete ATM-Zellen verschiedener Teilnehmer zu transformieren und den transformierten Verkehr zu dem entsprechenden Aufwärtsstreckenport eines optischen Netzwerks zu übertragen.

9. Breitband-Zugangsverfahren, **gekennzeichnet durch** die folgenden Schritte:
Verbinden eines Master-Steuerboards mit einem Teilnehmer-Schnittstellenboard einer Breitband-Zugangseinrichtung über einen uniformen seriellen Bus;
Transformieren des Teilnehmerverkehrs, der übertragen werden muss, **durch** eines von dem Master-Steuerboard und dem Teilnehmer-Schnittstellenboard in serielle Signalrahmen des seriellen Busses und Übertragen der seriellen Signalrahmen zu dem anderen der beiden Boards (403, 404, 405, 503, 504, 505);
wenn die seriellen Signalrahmen empfangen werden, Wiederherstellen des Verkehrs durch das andere Board und Übertragen des wiederhergestellten Verkehrs zu der entsprechenden Schnittstelle auf der Basis des Typs des wiederhergestellten Verkehrs (406, 408, 409, 506, 508, 509); wobei der Schritt des Transformierens des Teilnehmerverkehrs, der übertragen werden muss, **durch** eines des Master-Steuerboards und des Teilnehmer-Schnittstellenboards in serielle Signalrahmen des seriellen Busses die folgenden Schritte umfasst:
Einkapseln von aus Signalen des Digitalanschlussteilnehmers erhaltenen Nutzinformationen, die ATM-Zellen umfassen, **durch** das Teilnehmer-Schnittstellenboard in die seriellen Signalrahmen des seriellen Busses (403); und
Einkapseln von Nutzinformationen, die von anderen Breitband-Einrichtungen erhaltene Ethernet-Rahmen umfassen, **durch** das Teilnehmer-Schnittstellenboard in die seriellen Signalrahmen des seriellen Busses (404);
Einkapseln von aus Aufwärtsstreckenverkehr erhaltenen ATM-Zellen **durch** das Master-Steuerboard in die seriellen Signalrahmen des seriellen Busses (503); und
Einkapseln von aus dem Aufwärtsstreckenverkehr erhaltenen Ethernet-Rahmen durch das Master-Steuerboard in die seriellen Signalrahmen des seriellen Busses (504).

10. Verfahren nach Anspruch 9,
wobei das Übertragen der seriellen Signalrahmen zu dem anderen der beiden Boards die folgenden Schritte umfasst:
Übertragen der seriellen Signalrahmen durch das Teilnehmer-Schnittstellenboard zu dem Master-Steuerboard über den seriellen Bus (405) und Übertragen der seriellen Signalrahmen durch das Master-Steuerboard zu dem entsprechenden Teilnehmer-Schnittstellenboard über den seriellen Bus (505); und
wobei das Wiederherstellen des Verkehrs durch das andere Board, wenn die seriellen Signalrahmen empfangen werden, und das Übertragen des wiederhergestellten Verkehrs zu dem entsprechenden Datenkanal auf der Basis des Typs des wiederhergestellten Verkehrs die folgenden Schritte umfassen:
Konvergieren des Teilnehmerverkehrs desselben Typs durch das Master-Steuerboard gemäß dem Diensttyp des aus dem seriellen Bus empfangenen Teilnehmerverkehrs und Übertragen des Teilnehmerverkehrs über eine Aufwärtsstreckenschnittstelle und Extrahieren des Teilnehmerverkehrs durch das Teilnehmer-Schnittstellenboard aus den aus dem seriellen Bus empfangenen seriellen Signalrahmen und Übertragen des Teilnehmerverkehrs zu dem entsprechenden Teilnehmer.

## Revendications

1. Dispositif d'accès à bande large, **caractérisé en ce qu'**il comprend :
une carte de commande maître ;
un fond de panier configuré avec un bus série uniforme ;
une carte d'interface d'abonné connectée à la carte de commande maître par l'intermédiaire du bus série, et configurée pour encapsuler des informations de charge utile comportant des cellules à mode de Transfert asynchrone, ATM, obtenues à partir de signaux d'un abonné de boucle numérique dans des trames de signal série du bus série et encapsuler des informations de charge utile comportant des trames Ethernet obtenues depuis d'autres dispositifs à large bande dans les trames de signal série du bus série ;
la carte de commande maître étant configurée pour recevoir des trafics de liaison montante comprenant des cellules ATM et des trames Ethernet, encapsuler les cellules ATM obtenues à partir des trafics de liaison montante dans les trames de signal série du bus série et encapsuler les trames Ethernet obtenues à partir des trafics de liaison montante dans les trames de signal série du bus série ;
la carte de commande maître étant configurée pour extraire les cellules ATM à partir des trames de signal série reçues de la carte d'interface d'abonné par l'intermédiaire du bus série uniforme et transmettre les cellules ATM extraites par l'intermédiaire d'une interface de liaison montante ;
la carte de commande maître étant configurée pour extraire les trames Ethernet à partir des trames de signal série reçues de la carte d'interface d'abonné par l'intermédiaire du bus série uniforme et transmettre les trames Ethernet extraites par l'intermédiaire de l'interface de liaison montante ;
le fond de panier étant configuré pour transmettre les trames de signal série entre la carte de commande maître et la carte d'interface d'abonné ;
la carte d'interface d'abonné étant configurée pour extraire les cellules ATM des trames de signal série reçues de la carte de commande maître par l'intermédiaire du bus série uniforme et transmettre les cellules ATM extraites par l'intermédiaire d'une interface de la carte d'interface d'abonné ; et
la carte d'interface d'abonné étant configurée pour extraire les trames Ethernet à partir des trames de signal série reçues de la carte de commande maître par l'intermédiaire du bus série uniforme et transmettre les trames Ethernet extraites par l'intermédiaire d'une interface de la carte d'interface d'abonné.

2. Dispositif selon la revendication 1, dans lequel la carte d'interface d'abonné comprend :
un module d'interface de boucle numérique configuré pour permettre l'accès d'abonnés de boucle numérique, ou un module d'interface Ethernet configuré pour permettre l'accès d'autres dispositifs d'accès à large bande.

3. Dispositif selon la revendication 2, dans lequel le module d'interface de boucle numérique comprend au moins l'un :
d'une interface d'abonné de boucle numérique configurée pour recevoir et envoyer les signaux d'abonnés de boucle numérique ;
d'un jeu de puces de boucle numérique configuré pour obtenir les informations de charge utile à partir des signaux des abonnés de boucle numérique ;
d'un module de transformation d'interface configuré pour encapsuler les informations de charge utile obtenues à partir des signaux des abonnés de boucle numérique dans les trames de signal série du bus série et transformer les trames de signal série reçues du bus série en signaux des abonnés de boucle numérique.

4. Dispositif selon la revendication 3, dans lequel l'abonné de boucle numérique comprend au moins l'un : d'un abonné de boucle numérique asymétrique, d'un abonné de boucle numérique symétrique, d'un abonné de boucle numérique à hyper vitesse et d'un abonné de boucle numérique à débit binaire élevé ;
l'interface d'abonné de boucle numérique comprend au moins l'une :
d'une interface de boucle numérique asymétrique, configurée pour recevoir et envoyer les signaux d'un abonné de boucle numérique asymétrique ;
d'une interface de boucle numérique symétrique, configurée pour recevoir et envoyer les signaux d'un abonné de boucle numérique symétrique ;
d'une interface de boucle numérique à hyper vitesse, configurée pour recevoir et envoyer les signaux d'un abonné de boucle numérique à hyper vitesse ;
d'une interface de boucle numérique à débit binaire élevé, configurée pour recevoir et envoyer les signaux d'un abonné de boucle numérique à débit binaire élevé.

5. Dispositif selon l'une quelconque des revendications 1 à 4, dans lequel la carte de commande maître comprend :
une unité de convergence configurée pour faire converger toutes les trames de signal série reçues par l'intermédiaire du bus série, obtenir les trafics d'abonnés en classifiant les trames de signal série, traiter les trames de signal série classifiées, et
transmettre les trafics d'abonnés au port correspondant côté réseau ; ainsi que classifier les trafics d'abonnés reçus en provenance du côté réseau, traiter les trafics d'abonnés classifiés et transformer les trafics d'abonnés en trames de signal série, et
transmettre les trames de signal série au bus série.

6. Dispositif selon la revendication 5, dans lequel la carte de commande maître comprend en outre :
une unité centrale connectée à l'unité de convergence et configurée pour commander la carte d'interface d'abonné pour effectuer le traitement de couche physique des trafics d'abonnés et effectuer l'adaptation des protocoles de Couche 2 ;
une unité de traitement ATM connectée à l'unité de convergence, et configurée pour différencier les cellules ATM des différents abonnés dans les trames de signal série reçues et traitées par l'unité de convergence.

7. Dispositif selon la revendication 6, dans lequel l'unité de convergence comprend en outre :
un module de convergence de signal série configuré pour différencier différents services sur le bus série et obtenir les informations de services correspondantes ;
au moins une interface Ethernet configurée pour envoyer les trafics Ethernet obtenus par le module de convergence de signal série ;
une Interface PHY de test et d'opérations universelle pour ATM, UTOPIA (Universal Test and Operations PHY Interface for ATM), configurée pour transmettre les trafics ATM obtenus par le module de convergence de signal série à l'unité de traitement ATM.

8. Dispositif selon la revendication 5, dans lequel la carte de commande maître comprend en outre :
au moins une interface optique Giga-octet Ethernet, GE, configurée pour transformer les trafics envoyés depuis l'interface Ethernet et transmettre les trafics transformés au port de liaison montante correspondant d'un réseau optique ;
au moins une interface optique ATM configurée pour transformer les cellules ATM de différents abonnés traitées par l'unité de traitement ATM et transmettre les trafics transformés au port de liaison montante correspondant d'un réseau optique.

9. Procédé d'accès à large bande, **caractérisé en ce qu'**il comprend les étapes suivantes :
connexion d'une carte de commande maître à une carte d'interface d'abonné d'un dispositif d'accès à large bande par l'intermédiaire d'un bus série uniforme ;
transformation, par l'une ou l'autre de la carte de commande maître et de la carte d'interface d'abonné, des trafics d'abonnés qui devaient être transmis en trames de signal série du bus série et transmission des trames de signal série à l'autre des deux cartes (403, 404 ,405, 503 ,504 ,505) ;
suite à la réception des trames de signal série, restauration, par l'autre carte, des trafics et transmission des trafics restaurés à l'interface correspondante en fonction du type des trafics restaurés (406, 408, 409, 506, 508, 509) ; dans lequel l'étape de transformation, par l'une ou l'autre de la carte de commande maître et de la carte d'interface d'abonné, des trafics d'abonnés qui devaient être transmis en trames de signal série du bus série comprend les étapes suivantes :
encapsulage, par la carte d'interface d'abonné, des informations de charge utile comportant des cellules ATM obtenues à partir de signaux d'un abonné de boucle numérique dans les trames de signal série du bus série (403) ; et
encapsulage, par la carte d'interface d'abonné, des informations de charge utile comportant des trames Ethernet obtenues depuis d'autres dispositifs à large bande dans les trames de signal série du bus série (404) ;
encapsulage, par la carte de commande maître, des cellules ATM obtenues à partir des trafics de liaison montante dans les trames de signal série du bus série (503) ; et
encapsulage, par la carte de commande maître, des trames Ethernet obtenues à partir des trafics de liaison montante dans les trames de signal série du bus série (504).

10. Procédé selon la revendication 9,
dans lequel la transmission des trames de signal série à l'autre des deux cartes comprend les étapes suivantes : transmission, par la carte d'interface d'abonné, des trames de signal série à la carte de commande maître par l'intermédiaire du bus série (405), et transmission, par la carte de commande maître, des trames de signal série à la carte d'interface d'abonné correspondante par l'intermédiaire du bus série (505) ; et dans lequel suite à la réception des trames de signal série, la restauration, par l'autre carte, des trafics et la transmission des trafics restaurés au canal de données correspondant en fonction du type des trafics restaurés comprend les étapes suivantes :
convergence, par la carte de commande maître, des trafics d'abonnés du même type en fonction du type de service des trafics d'abonnés reçus du bus série, et
transmission des trafics d'abonnés par l'intermédiaire d'une interface de liaison montante, et extraction, par la carte d'interface d'abonné, des trafics d'abonnés à partir des trames de signal série reçues du bus série et transmission des trafics d'abonnés à l'abonné correspondant.
